# EUROPEAN PATENT SPECIFICATION

(11) **EP 0 568 379 B1**
(45) Date of publication and mention of the grant of the patent: **04.11.1998**
(21) Application number: 93303382.1
(22) Date of filing: 29.04.1993
(51) Int. Cl.: B01F 17/00, C07F 3/06, B01F 3/12, A01N 25/14, A01N 47/14, A01N 47/26

(54) **Compositions and method for improving the wetting of particulates**
Zusammensetzungen und Verfahren zur Verbesserung der Benetzung von Partikeln
Compositions et procédé d'amélioration du mouillage de matière particulaire

(30) Priority: 01.05.1992 US 877332; 19.03.1993 US 33997
(43) Date of publication of application: 03.11.1993
(73) Proprietor: ROHM AND HAAS COMPANY, Philadelphia Pennsylvania 19105 (US)
(72) Inventor: Guo, Yili, Maple Glen, Pennsylvania 19002 (US)
(74) Representative: Angell, David Whilton

(56) References cited:
- DD-A- 151 040
- DE-A- 2 335 616
- FR-A- 1 521 463
- US-A- 5 001 150
- DATABASE WPI Week 8148, Derwent Publications Ltd., London, GB; AN 81-88154D & JP-A-56 133 202 (KUMIAI CHEM IND KK) 19 October 1981

## Description

Compositions containing particulates are often admixed with liquid compositions for application purposes. This broad operation includes mixing of powders in the household to making medical solutions to other applications such as on-site preparation of solutions in industrial or agricultural applications. Examples, without limitations, range from mixing flour with water in baking to making herbicidal or fungicidal agricultural compositions for field spraying or other distributing methods. One parameter of such operations is the time that it takes for the particulates to become wetted (i.e. "wetting time" or "wet-out time") to permit dispersion or dissolution of the particulates in a liquid application medium. "Wetting time" or "wet-out time" can be designated as the time for a known weight of solids poured on top of water in a container to submerge completely below the surface of the water. The wetting time can have a major impact on the time of operations, delays associated therewith, the degree of completeness of dissolution or dispersion and the effectiveness of the applied composition.

There continues to be a need for new and/or improved methods to improve the wetting time of particulates.

JP-A-56133202 discloses the addition of iron and/or copper salts as trace elements to manganese ethylene bisdithiocarbamate. However, since the trace elements added result in decrease in fungicidal activity and increase in phytotoxicity, a zinc or nickel compound is added as stabiliser to avoid such deleterious effects of the iron/copper salts.

US-A-5,001,150 discloses the production of spray dried, non-dusty, dry-flowable granules of mancozeb which have aging stability, low ethylenethiourea content and improved dispersibility. The dry-flowable mancozeb granules are produced by initially preparing an aqueous slurry of maneb, zinc sulfate and various other components (including dispersant and surfactant) and then spray drying this slurry to produce the granules. The zinc sulfate is added for the purpose of reacting with the maneb to produce the mancozeb.

We have surprisingly discovered that the addition to particulate compositions of certain salts increases the penetration rate of liquid into the particulates relative to the rate of penetration in the absence of said salt(s), and thereby can reduce the wetting time and/or the dispersion time of said particulates in liquids.

According to the present invention there is provided the use, in a particulate composition, of one or more of ammonium, boron, zinc, manganese, copper, iron, cobalt, aluminum, magnesium, calcium, strontium, sodium, barium, gallium, tin, lead, silver, nickel or potassium salts to improve the penetration rate of a liquid into the particulates such that the wet-out time of said composition is at least 30% less than the wet-out time of a comparable composition comprising identical particulates and none of said salts.

The incorporation of such salts into particulate compositions is shown to increase the penetration rate of liquid into the particulates relative to the rate of penetration in the absence of said salt(s), and consequently to reduce the wetting and/or dispersion time. For example, the wet-out time of the composition may be at least 50% less, preferably at least 75% less, than the wet-out time of a comparable composition comprising identical particulates and none of the salts.

Mixing of the salts with the particulates may occur before, during or after addition of the particulates to the liquid. The methods can include simple admixing steps or milling of the solid particulates with the salt(s) so as to adfix or adhere the salt to the surface of the solid particulate.

The particulates and liquid in the invention can be any suitable combination of particulates and liquid for an intended utility. For example, the particulates could be commercial foodstuff, e.g. powdered milk, flour etc., and the liquid can be water or water-containing solutions (e.g. milk). Other combinations include agricultural utilities, such as in-field formulations of agrochemicals, e.g. herbicides etc., and water. It is not intended that the present invention is limited to water as the liquid by these examples.

The salts suitable for use in the present invention preferably comprise ammonium or boron, or one or more metals selected from zinc, manganese, copper, iron, cobalt, aluminum, magnesium, calcium, strontium, sodium, barium, tin, lead, silver, nickel, and potassium. Such ammonium, boron or metal moieties are alternatively referred to as the cation of the salt. The anionic portion of the salt is preferably a moiety such that the one or more salt(s) has an anion portion which is SO₄⁻²,Cl⁻¹, Br⁻¹, I⁻¹, C₂H₃O₂⁻¹, CO₃⁻², NO₃⁻¹, OH⁻¹, S⁻², PO₄⁻³, AlO₂⁻¹, AsO₃⁻³, HAsO₃⁻², H₂AsO₃⁻¹, AsO₄⁻³, HAsO₄⁻², H₂AsO₄⁻¹, B₄O₇⁻², CN⁻¹, PO₃⁻³, HPO₃⁻², H₂PO₃⁻¹, HPO₄⁻², , H₂PO₄⁻¹, P₂O₇⁻⁴, S₂O₆⁻², CHO₂⁻¹, SO₃⁻² or a mixture thereof. In a preferred embodiment of the invention the salt comprises zinc chloride.

The amount of salt used is that amount which is effective to increase the penetration rate of liquid into the particulate, preferably a significant amount of increase. For example, the increase in penetration rate is such that the wet-out time is about thirty percent less, more preferably about fifty percent less, even more preferably about seventy-five percent less, than that without the salts. The weight amount of the salt can range preferably from about 0.1 to about 50 weight percent, more preferably from about 0.1 to about 10 weight percent, even more preferably from about 0.1 to about 6 weight percent, of the total solid composition weight. In one preferred embodied composition the amount of effective salt in the composition is in a weight percent of from about 0.1 percent to about 6 percent and the wet-out time of the composition is less than about fifty percent of the wet-out time of a comparable composition having an absence of said salt.

The particular form or nature of the salt can vary and still provide the benefits of the present invention. For instance, the one or more salt(s) can comprise a multiple salt complex, ie a complex of two or more different salts. For example, a multiple salt complex can be represented by the formula 2NaCl·CaCl₂ or K₂CO₃·Na₂CO₃. Such multiple salt complexes can be hydrated, such as ZnCl₂·3ZnO·5H₂O for example.

Other salts may also be hydrated, such as for example CuSO₄·H₂O. The ratio of salt molecules to water molecules need not be one to one.

The salt need not consist of only one cation in the salt compound. Accordingly, embodied compositions can comprise a multiple cation salt. One example of a multiple salt is K₂Zn(SO₄)₂. Similarly, the anionic portion can have multiple anions.

One embodiment of the present invention is wherein the one or more salt(s) comprise a melted salt. A mixture of salts can be melted together for the melted salt. Examples are 2NaCl·CaCl₂, Na₂SO₄·MgSO₄, and 2NaCl·SrCl₂.

In a preferred embodiment of the present invention the one or more salts comprise a multiple salt complex or a hydrated salt or a multiple cation salt or a melted salt.

Without limiting the scope of the present invention, the following salts are representative of those of the invention:

| | | | |
|---|---|---|---|
| Zn(C₂H₃O₂)₂·H₂O | Zn(C₂H₃O₂)₂·2H₂O | Zn(C₂H₃O)₂ | CuCl₂ |
| CuSO₄ | Cu(NO₃)₂ | MnCl₂·4H₂O | MnCl₂ |
| MnCl₂·2H₂O | ZnSO₄ | ZnSO₄·H₂O | MnSO₄ |
| CuCl₂·2H₂O | CuSO₄·H₂O | ZnBr₂ | ZnI₂ |
| MnSO₄·H₂O | Mn(NO₃)₂ | Mn(CHO₂)₂ | FeCl₂ |
| Mn(C₂H₃O₂)₂ | FeCl₃ | FeCl₂·2H₂O | FeCl₂·4H₂O |
| FeCl₃·2.5H₂O | FeCl₃·6H₂O | FeSO₄ | FeSO₄·H₂O |
| FeSO₄·4H₂O | CoCl₂ | CoBr₂ | BBr₃ |
| CoCl₂·2H₂O | AlCl₃ | AlCl₃·6H₂O | AlBr₃ |
| AlI₃ | Al₂S₃ | AlCl₃·SO₂ | AlCl₃·5SO₂ |
| AlCl₃·5H₂S | Al₂(SO₄)₃·6H₂O | Al₂(SO₄)₃·18H₂O | AlCl₃·NH₃ |
| AlCl₃·3NH₃ | AlCl₃·NH₄Cl | AlCl₃ ·5NH₃ | AlCl₃·6NH₃ |
| AlCl₃ ·9NH₃ | AlCl₃·3/4ZnCl₂ | AlCl₃·AgCl | MgCl₂ |
| MgCl₂·2H₂O | MgCl₂·4H₂O | MgCl₂·6H₂O | MgBr₂ |
| MgSO₄ | MgSO₄·H₂O | MgSO₄·2H₂O | CaCl₂ |
| CaCl₂·H₂O | CaCl₂·2H₂O | Ca(NO₃)₂ | CaBr₂ |
| Ca(C₂H₃O₂)₂·H₂O | CaI₂ | CaSO₄ | MgI₂ |
| MgSO₄·4H₂O | SrO | SrCl₂ | SrBr₂ |
| SrBr₂·H₂O | SrBr₂·2H₂O | Na₂O | NaOH |
| NaOH·1/2H₂O | NaOH ·H₂O | Na₂S | NaHS₂ |
| Na₂Se | NaPO₃ | Na₂P₂Cl₇ | Na₂HPO₃ |
| Na₂HPO₄ | Na₃HP₂O₇ | Na₂CO₃ | NaCl·AlCl₃ |
| 3NaCl·2AlCl₃ | KOH | K₂CO₃·Na₂CO₃ | ZnCl₂ |
| K₂CO₃·2NaCO₃ | K₂CO₃·3Na₂CO₃ | K₂CO₃·4Na₂CO₃ | K₂S |
| 2K₂CO₃·Na₂CO₃ | 3K₂CO₃·Na₂CO₃ | K₂CO₃ ·1/2H₂O | KC₂H₃O₂ |
| K₂Zn(SO₄)₂ | KCl·AlCl₃ | 2KCN·Zn(CN)₂ | KCl·MgCl₂ |
| K₂SO₄·CuSO₄ | 3KCl·2AlCl₃ | 3KCl·AlCl₃ | 2KCl·MgCl₂ |
| Mn(C₂H₃O₂)₂·4H₂O | 4KCl·MgCl₂ | K₂Mg(SO₄)₂ | 2KCl·CaCl₂ |
| Melted salt mixtures: | Na₂SO₄·MgSO₄ | 2NaCl·CaCl₂ | 2NaCl·SrCl₂ |

Other embodiments include compositions wherein the solid particulates comprise propanil or one or more dithiocarbamate or bisdithiocarbamoyl disulfide compound(s). In one embodiment there is preferred one or more dithiocarbamate compound(s) which are selected from ethylenebisdithiocarbamate metal salts, dimethyldithiocarbamate metal salts, propylenebisdithiocarbamate metal salts, and/or metiram-complex. Metiram-complex can be named as tris [ammine-[ethylen bis (dithiocarbamato)] zinc (II)] [tetrahydro-1,2,4,7-dithiadiazocine-3,8-dithione] polymer. In another embodiment, thiram [e.g. bis (dimethylthio-carbamoyl) disulfide] can be used in place of the dithiocarbamate compound. A preferred ethylenebisdithiocarbamate metal salt comprises zinc chloride. Also preferred are compositions wherein the solid particulates comprise N-(3,4-dichlorophenyl)propionamide (propanil). Such compositions can have applications in agricultural operations.

Embodied compositions can additionally comprise a surface active agent in an amount up to about 20 weight percent of the total composition weight, preferably from about 0.1 percent to about 15 percent, more preferably from about 1 percent to about 10 percent. Preferred surface active agents are, but are not limited to, a group consisting of Wafex™ dispersant, Igepal™ CA 720 surfactant, Igepal CO 630 surfactant, Igepal DM 970 surfactant, Borresperse™ NA ligosulfonate, Aerosol™ OT-70PG surfactant, and Surfynol™ 104 S surfactant.

The following examples are intended to illustrate but not limit the scope of the embodied invention.

### EXPERIMENT 1

A comparison of wetting time was made between regular baking flour without zinc chloride and with zinc chloride. "Wetting time" or "wet-out time" is defined as the time for a known weight of solids poured on top of water in a container to submerge completely below the surface of the water. The samples of flour with zinc chloride were prepared by first admixing the flour and zinc chloride powder (98%, A.C.S. reagent, Aldrich Chemical Company, Inc.) before addition to 100 ml of tap water for timing to wet-out condition. No stirring was performed after the addition of sample to the water. The following results were obtained:

| Sample No. | Flour Weight (grams) | ZnCl₂ Weight (grams) | Wet-Out Time (seconds) |
|---|---|---|---|
| 1 | 5.00 | 0.30 | 302 |
| 2 | 5.00 | 0.30 | 269 |
| 3 | 5.00 | 0.00 | 815 |
| 4 | 5.00 | 0.00 | 790 |

### EXPERIMENT 2

A mancozeb powder was produced by spray-drying a slurry comprised of the following components:

| Component | Weight Percent |
|---|---|
| Maneb Wet-cake* | 65.9 |
| ZnSO₄·7H₂O | 3.8 |
| Hexamethylenetetramine Stabilizer | 1.1 |
| Reax™ 100M Dispersant | 3.3 |
| Water | 25.9 |

| | |
|---|---|
| *The wet cake prior-to admixing is about 55% manganese ethylenebisdithiocarbamate. | |

The spray-dried mancozeb powder was separated into two samples, one sample being dry mixed with zinc chloride in a weight ratio of zinc chloride:mancozeb = 2:100. Using procedures similar to Experiment 1, the following results were observed:

| Sample | Wet-out time (Minutes) |
|---|---|
| without ZnCl₂ | 12.0 |
| with ZnCl₂ | 3.5 |

### EXPERIMENT 3

Samples of mancozeb powders which were sprayed-dried to a moisture content of about 6 to about 9 percent water by weight were produced from slurries comprising admixed 65.9 weight percent maneb wet-cake and 1.1 weight percent hexamethylenetetramine stabilizer as well as the following components in the reported weight percentages. The respective reported wet-out times were observed. Suspensibility of each sample was determined using the modified WHO method of admixing 2 grams of sample in 250 grams of water in a 250 milliliter cylinder, inverting thirty times and, after thirty minutes, collecting the bottom ten percent, which is then dried and weighed relative to the original 2 grams. The suspensibility for the samples ranged from about 60 to about 80 percent.

| Sample No | ZnSO₄ ·7H₂O | ZnCl₂ | Surface Active Agent* | Water | Wet-Out Time(secs) |
|---|---|---|---|---|---|
| 1^{a} | 3.8 | 0.0 | 3.3^{d} | 27.85 | 779 |
| 2 | 3.8 | 0.0 | 2.0^{b} | 26.2 | 280 |
| 3 | 3.8 | 0.0 | 2.0^{b} | 26.7 | 80 |
| | | | 0.5^{c(3)} | | |
| 4 | 3.8 | 0.0 | 2.0^{b} | 26.7 | 73 |
| | | | 0.5^{c(1)} | | |
| 5 | 3.8 | 0.0 | 2.0^{b} | 26.7 | 51 |
| | | | 0.5^{c(2)} | | |
| 6 | 1.9 | 0.9 | 2.0^{b} | 28.2 | 60 |
| 7^{a} | 0.0 | 1.8 | 3.3^{d} | 27.85 | 55 |
| 8^{a} | 0.0 | 1.8 | 2.9^{d} | 26.62 | 28 |
| | | | 0.63^{e} | | |
| 9 | 0.0 | 1.8 | 2.9^{d} | 27.3 | 26 |
| | | | 1^{f} | | |
| 10 | 0.0 | 1.8 | 2.0^{b} | 29.2 | 16 |

| | | | | | |
|---|---|---|---|---|---|
| *Agents | | | | | |
| a: 0.05 weight percent Antifoam™ C antifoaming agent [Corning] added to these samples | | | | | |
| b: Wafex™ dispersant | | | | | |
| c: (1) Igepal™ CA 720, (2) Igepal CO 630, and (3) Igepal DM 970 surfactants [Rhone Poulenc Company] | | | | | |
| d: Borresperse™ NA ligosulfonate [LignoTech Inc.] | | | | | |
| e: Aerosol™ OT-70PG surfactant [American Cyanamid] | | | | | |
| f: Surfynol™ 104 S surfactant [Air Products & Chemicals Company]. | | | | | |

## Claims

1. The use, in a particulate composition, of one or more of ammonium, boron, zinc, manganese, copper, iron, cobalt, aluminum, magnesium, calcium, strontium, sodium, barium, gallium, tin, lead, silver, nickel or potassium salts to improve the penetration rate of a liquid into the particulates such that the wet-out time of said composition is at least 30% less than the wet-out time of a comparable composition comprising identical particulates and none of said salts.

2. Use as claimed in claim 1, wherein said one or more salts are used in an amount of 0.1 to 50 weight percent.

3. Use as claimed in claim 2, wherein said one or more salts are used in an amount of 0.1 to 10 weight percent.

4. Use as claimed in claim 3, wherein said one or more salts are used in an amount of 0.1 to 6 weight percent.

5. Use as claimed in any preceding claim, wherein said one or more salts has an anion portion which is SO₄⁻², Cl⁻¹, Br⁻¹, I⁻¹, C₂H₃O₂⁻¹, CO₃⁻², NO₃⁻¹, OH⁻¹, S⁻², PO₄⁻³, AlO₂⁻², AsO₃⁻³, HAsO₃⁻², H₂AsO₃⁻¹, AsO₄⁻³, HAsO₄⁻², H₂AsO₄⁻¹, B₄O₇⁻², CN⁻¹, PO₃⁻³, HPO₃⁻², H₂PO₃⁻¹, HPO₄⁻², H₂PO₄⁻¹, P₂O₇⁻⁴, S₂O₆⁻², CHO₂⁻¹, SO₃⁻² or a mixture thereof.

6. Use as claimed in any preceding claim, wherein said salt comprises zinc chloride.

7. Use as claimed in any of claims 1 to 5, wherein said one or more salts comprises a multiple salt complex or a hydrated salt or a multiple cation salt or a melted salt.

8. Use as claimed in claim 7, wherein:-
(a). said multiple complex salt is 2NaCl·CaCl₂ or K₂CO₃·Na₂CO₃; and/or
(b). said hydrated salt is CuSO₄·H₂O; and/or
(c). said multiple cation salt is K₂Zn(SO₄)₂; and/or
(d). said melted salt is 2NaCl·CaCl₂.

9. Use as claimed in any preceding claim, wherein said particulates comprise propanil or one or more dithiocarbamate or bisdithiocarbamoyl disulfide compound(s).

10. Use as claimed in claim 9, wherein said one or more dithiocarbamate compounds are selected from ethylenebisdithiocarbamate metal salts, dimethyldithiocarbamate metal salts, propylenebisdithiocarbamate metal salts and metiram-complexes.

11. Use as claimed in claim 10, wherein said ethylenebisdithiocarbamate metal salt comprises zinc chloride.

12. Use as claimed in claim 10 or claim 11, wherein said composition further comprises a surface active agent in an amount up to 20 weight percent of the total composition weight.

13. Use as claimed in claim 12, wherein said surface active agent is present in an amount of 0.1 to 15 weight percent of the total composition weight.

14. Use as claimed in claim 13, wherein said surfcae active agent is present in an amount of 1 to 10 weight percent of the total composition weight.

15. Use as claimed in any preceding claim, wherein the wet-out time of said composition is at least 50% less than the wet-out time of a comparable composition comprising identical particulates and none of said salts.

16. Use as claimed in claim 15, wherein the wet-out time of said composition is at least 75% less than the wet-out time of a comparable composition comprising identical particulates and none of said salts.

## Patentansprüche

1. Verwendung einer teilchenförmigen Zusammensetzung von einem oder mehreren von Ammonium-, Bor-, Zink-, Mangan-, Kupfer-, Eisen-, Cobalt-, Aluminium-, Magnesium-, Calcium-, Strontium-, Natrium-, Barium-, Gallium-, Zinn-, Blei-, Silber-, Nickel- oder Kaliumsalzen zur Verbesserung der Penetrationsrate einer Flüssigkeit in die Feststoffteilchen derart, daß die Befeuchtungszeit dieser Zusammensetzung mindestens 30% weniger beträgt, als die Befeuchtungszeit einer vergleichbaren Zusammensetzung, welche identische Feststoffteilchen und keines der Salze umfaßt.

2. Verwendung nach Anspruch 1, wobei das eine oder die mehreren Salze in einer Menge von 0,1 bis 50 Gew.-% verwendet wird bzw. werden.

3. Verwendung nach Anspruch 2, wobei das eine oder die mehreren Salze in einer Menge von 0,1 bis 10 Gew.-% verwendet wird bzw. werden.

4. Verwendung nach Anspruch 3, wobei das eine oder die mehreren Salze in einer Menge von 0,1 bis 6 Gew.-% verwendet wird bzw. werden.

5. Verwendung nach einem vorhergehenden Anspruch, wobei das eine oder die mehreren Salze einen Anionenteil aufweist bzw. aufweisen, welcher SO₄²⁻, Cl⁻, Br⁻, I⁻, C₂H₃O₂⁻, CO₃²⁻, NO₃⁻, OH⁻, S²⁻, PO₄³⁻, AlO₂²⁻, AsO₃³⁻, HAsO₃²⁻, H₂AsO₃⁻, AsO₄³⁻, HAsO₄²⁻, H₂AsO₄⁻, B₄O₇²⁻, CN⁻, PO₃³⁻, HPO₃²⁻, H₂PO₃⁻, HPO₄²⁻, H₂PO₄⁻, P₂O₇⁴⁻, S₂O₆²⁻, CHO₂⁻, SO₃²⁻ oder ein Gemisch davon ist.

6. Verwendung nach einem vorhergehenden Anspruch, wobei das Salz Zinkchlorid umfaßt.

7. Verwendung nach einem der Ansprüche 1 bis 5, wobei das eine oder die mehreren Salze einen Mehrfachsalzkomplex oder ein hydratisiertes Salz oder ein Mehrfachkationensalz oder ein geschmolzenes Salz umfaßt bzw. umfassen.

8. Verwendung nach Anspruch 7, wobei:
(a) das Mehrfachkomplexsalz 2NaCl·CaCl₂ oder K₂CO₃·Na₂CO₃ ist; und/oder
(b) das hydratisierte Salz CuSO₄·H₂O ist; und/oder
(c) das Mehrfachkationensalz K₂Zn(SO₄)₂ ist; und/oder
(d) das geschmolzene Salz 2NaCl·CaCl₂ ist.

9. Verwendung nach einem vorhergehenden Anspruch, wobei die Feststoffteilchen Propanil oder eine oder mehrere Dithiocarbamat- oder Bisdithiocarbamoyl-Disulfidverbindung(en) umfassen.

10. Verwendung nach Anspruch 9, wobei die eine oder mehreren Dithiocarbamatverbindung(en) aus Ethylenbisdithiocarbamatmetallsalzen, Dimethyldithiocarbamatmetallsalzen, Propylenbisthiocarbamatmetallsalzen und Metiram-Komplexen ausgewählt ist bzw. sind.

11. Verwendung nach Anspruch 10, wobei das Ethylenbisdithiocarbamatmetallsalz Zinkchlorid umfaßt.

12. Verwendung nach Anspruch 10 oder 11, wobei die Zusammensetzung weiter ein grenzflächenaktives Mittel in einer Menge von bis zu 20 Gew.-%, bezogen auf das Gesamtgewicht der Zusammensetzung, umfaßt.

13. Verwendung nach Anspruch 12, wobei das grenzflächenaktive Mittel in einer Menge von 0,1 bis 15 Gew.-%, bezogen auf das Gesamtgewicht der Zusammensetzung, vorliegt.

14. Verwendung nach Anspruch 13, wobei das grenzflächenaktive Mittel in einer Menge von 1 bis 10 Gew.- %, bezogen auf das Gesamtgewicht der Zusammensetzung, vorliegt.

15. Verwendung nach einem vorhergehenden Anspruch, wobei die Befeuchtungszeit der Zusammensetzung mindestens 50% Weniger beträgt, als die Befeuchtungszeit einer vergleichbaren Zusammensetzung, die identische Feststoffteilchen und keines der Salze umfaßt.

16. Verwendung nach Anspruch 15, wobei die Befeuchtungszeit der Zusammensetzung mindestens 75% weniger beträgt, als die Befeuchtungszeit einer vergleichbaren Zusammensetzung, die identische Feststoffteilchen und keines der Salze umfaßt.

## Revendications

1. Utilisation, dans une composition particulaire, d'un ou plusieurs sels d'ammonium, de bore, de zinc, de manganèse, de cuivre, de fer, de cobalt, d'aluminium, de magnésium, de calcium, de strontium, de sodium, de baryum, de gallium, d'étain, de plomb, d'argent, de nickel ou de potassium pour améliorer la vitesse de pénétration d'un liquide dans les matières particulaires de sorte que le temps d'imprégnation complète de ladite composition est au moins 30 % inférieur au temps d'imprégnation complète d'une composition comparable comprenant des matières particulaires identiques et aucun desdits sels.

2. Utilisation selon la revendication 1, dans laquelle lesdits un ou plusieurs sels sont utilisés en une proportion de 0,1 à 50 % en poids.

3. Utilisation selon la revendication 2, dans laquelle lesdits un ou plusieurs sels sont utilisés en une proportion de 0,1 à 10 % en poids.

4. Utilisation selon la revendication 3, dans laquelle lesdits un ou plusieurs sels sont utilisés en une proportion de 0,1 à 6 % en poids.

5. Utilisation selon l'une quelconque des revendications précédentes, dans laquelle lesdits un ou plusieurs sels ont une partie anionique qui est
SO₄⁻², Cl⁻¹, Br⁻¹, I⁻¹, C₂H₃O₂⁻¹, CO₃⁻², NO₃⁻¹, OH⁻¹, S⁻², PO₄⁻³, AlO₂⁻², AsO₃⁻³, HAsO₃⁻², H₂AsO₃⁻¹, AsO₄⁻³, HAsO₄⁻², H₂AsO₄⁻¹, B₄O₇⁻², CN⁻¹, PO₃⁻³, HPO₃⁻², H₂PO₃⁻¹, HPO₄⁻², H₂PO₄⁻¹, P₂O₇⁻⁴, S₂O₆⁻², CHO₂⁻¹, SO₃⁻²
ou un mélange de ceux-ci.

6. Utilisation selon l'une quelconque des revendications précédentes, dans laquelle ledit sel comprend du chlorure de zinc.

7. Utilisation selon l'une quelconque des revendications 1 à 5, dans laquelle lesdits un ou plusieurs sels comprennent un complexe de plusieurs sels ou un sel hydraté ou un sel à plusieurs cations ou un sel fondu.

8. Utilisation selon la revendication 7, dans laquelle :
(a) ledit complexe de plusieurs sels est 2NaCl·CaCl₂ ou K₂CO₃·Na₂CO₃ ; et/ou
(b) ledit sel hydraté est CuSO₄·H₂O ; et/ou
(c) ledit sel à plusieurs cations est K₂Zn(SO₄)₂ ; et/ou
(d) ledit sel fondu est 2NaCl·CaCl₂.

9. Utilisation selon l'une quelconque des revendications précédentes, dans laquelle lesdites matières particulaires comprennent du propanil ou un ou plusieurs composé(s) dithiocarbamate(s) ou disulfure(s) de bisdithiocarbamoyle.

10. Utilisation selon la revendication 9, dans laquelle lesdits un ou plusieurs composés dithiocarbamates sont choisis parmi les sels métalliques d'éthylènebisdithiocarbamate, les sels métalliques de diméthyldithiocarbamate, les sels métalliques de propylènebisdithiocarbamate et les complexes de métirame.

11. Utilisation selon la revendication 10, dans laquelle ledit sel métallique d'éthylènebisdithiocarbamate comprend le chlorure de zinc.

12. Utilisation selon la revendication 10 ou la revendication 11, dans laquelle ladite composition comprend en outre un agent tensioactif en une proportion allant jusqu'à 20 % en poids par rapport au poids total de la composition.

13. Utilisation selon la revendication 12, dans laquelle ledit agent tensioactif est présent en une proportion de 0,1 à 15 % en poids par rapport au poids total de la composition.

14. Utilisation selon la revendication 13, dans laquelle ledit agent tensioactif est présent en une proportion de 1 à 10% en poids par rapport au poids total de la composition.

15. Utilisation selon l'une quelconque des revendications précédentes, dans laquelle le temps d'imprégnation complète de ladite composition est au moins 50 % inférieur au temps d'imprégnation complète d'une composition comparable comprenant des matières particulaires identiques et aucun desdits sels.

16. Utilisation selon la revendication 15, dans laquelle le temps d'imprégnation complète de ladite composition est au moins 75% inférieur au temps d'imprégnation complète d'une composition comparable comprenant des matières particulaires identiques et aucun desdits sels.
